Europäisches Patentamt

**European Patent Office**

Office européen des brevets

(19)

(11) Publication number: **0 024 167**

**A2**

(12)

# EUROPEAN PATENT APPLICATION

(21) Application number: **80302704.4**

(22) Date of filing: **07.08.80**

(51) Int. Cl.³: **G 01 B 9/021**
**G 01 D 5/26**

(30) Priority: **07.08.79 GB 7927527**
**30.07.80 GB 8024901**

(43) Date of publication of application:
**25.02.81 Bulletin 81/8**

(84) Designated Contracting States:
**CH DE FR GB LI SE**

(71) Applicant: **ROLLS-ROYCE LIMITED**
**65 Buckingham Gate**
**London, SW1E 6AT(GB)**

(71) Applicant: **Loughborough Consultants Limited**
**University of Technology**
**Loughborough Leicestershire LE11 3TU(GB)**

(72) Inventor: **Jones, Robert**
**33 York Road**
**Loughborough Leicestershire(GB)**

(74) Representative: **Leaman, Keith**
**Rolls-Royce Limited P.O. Box 3 Filton**
**Bristol BS12 7QE(GB)**

(54) Method and apparatus for speckle pattern interferometric determination of point displacements.

(57) A method of, and apparatus for, measuring displacement of a surface relative to a datum using an interferometer of the type in which a beam of co-herent light is directed at the surface and first and second speckle interference patterns are formed and superimposed on one another. A single speckle of the superimposed patterns, is observed and the cyclic variation in intensity of the observed speckle, (caused by a relative phase change between the first and second patterns due to displacement of the surface relative to the beam) is observed. The number of cyclic variations in intensity of the observed speckle is counted and correlated to the amount of displacement relative to the datum.

Fig.1.

SPECKLE PATTERN INTERFEROMETRIC
DETERMINATION OF POINT DISPLACEMENTS

This invention relates to speckle pattern interferometry for the measurement of displacements of surface portions of a body. The invention has particular relevance to the measurement of in-plane displacements and strain of a surface and also out-of-plane displacements, vibrations, or shape measurements of a surface of a body.

The phenomenon of speckle pattern interferometry and its use in determining in-plane displacements has been described by J. A. Leendertz - see Journal of Physics E: Scientific Instruments, 1970, Volume 3, pages 214 - 218, with particular reference to section 3 and Figure 7 thereof. This paper describes a speckle pattern interferometric technique where two speckle patterns are superimposed so that the distribution of intensity in the resultant superimposed pattern depends upon the relative phases of the component patterns. By measuring the correlation between the superimposed patterns at two different times, changes of relative phase can be detected and this can be related to in-plane or normal displacements of the surface under examination. This technique relies on comparing the superimposed pattern over an extensive field of view, and a photographic technique is described for comparing the superimposed speckle patterns at different times.

British Patent No. 1392448 also describes, with reference to Figure 3 of the drawings thereof, the use of television techniques in the observation of two superimposed speckle patterns produced when a planar surface is illuminated by two collimated beams of coherent light derived from a single laser source. The interferometric technique described in this patent enables in-plane displacement of a surface under examination to be measured. Here again the techique described in this patent requires the comparison of complete superimposed speckle patterns to be studied over an extensive field of view to enable "before" and "after" comparisons to be made.

The prior art uses of speckle pattern interferometry above referred to, involve the production of a photographic or video recording of the speckle patterns derived from the surface under observation in its undeformed state and the comparison of this recording with the patterns produced when the surface suffers in-plane deformation. On such deformation occurring, the pattern observed comprises interference fringes defining constant in-plane displacement in accordance with the equation:-

$$2d_x \sin \theta = N\lambda \qquad \ldots\ldots(1)$$

where, $d_x$ = displacement parallel to the x axis (the surface under observation lying in the x - y plane);

$N$ = fringe order number; and

$\lambda$ = wavelength of the laser light.

It can be seen that a linear in-plane strain will from equally spaced fringes parallel to the y axis and that the strain along the x axis, $\mathcal{E}_x$, is given by:-

$$\mathcal{E}_x = \frac{d'_x - d''_x}{\Delta_1} \qquad \ldots\ldots(2\underline{a})$$

$$= \frac{\lambda}{2\Delta 1 \sin \theta} \cdot (N' - N'') \qquad \ldots\ldots(2\underline{b})$$

where, $d'_x$ and $d''_x$ are the displacements at two points in the surface separated by a distance $\Delta 1$; and

N' , N'' are the corresponding fringe order numbers at these two points.

Equations 2$\underline{a}$ and 2$\underline{b}$ may be also expressed in the form

$$\frac{\lambda}{\Delta x} = 2\mathcal{E}_x \sin \theta \qquad \ldots\ldots(3)$$

where, $\Delta x$ is the fringe spacing. This technique therefore gives a field view of the in-plane strain distribution which is obviously very useful for stress/strain analysis problems.

According to the teaching of said specification No. 1392448 (see particularly Page 3 lines 120 -122), with at least one of the systems described therein changes of in-plane deformation of the surface under observation can be studied continuously.

However, these prior art systems have certain limitations when attempts are made to use them in the form of a gauge for measuring strains. For example, using a single initial recording and a gauge length of reasonable size (25 mm or thereabouts) strains that can be readily measured lie within a rather limited range (typically in the range $100\mu\mathcal{E}$ down to $10\mu\mathcal{E}$) outside which the interference fringes become either too fine or too broad to be readily observed. While the range can be extended by subdividing the range into a series of 'steps' and making a reference state recording for a specifice strain with each 'step', this is inconvenient in view of time involved in making each reference state recording and re-correlating the speckle patterns. For example, when using television techniques with a video store, each recording takes a minimum of 1/25 second (assuming an interlaced scan of 50 frames per second). Such delays may well be unacceptable when dynamic strains are to be measured. A further limitation on the use of the prior art systems is set by the fact that, if the object under observation undergoes a rigid body displacement of the order of $10^2\mu$m, the fringes lose visibility due to decorrelation of the speckle patterns.

An object of the present invention is to provide a method of, and apparatus for, measuring continuously displacements of a surface relative to a datum for the purposes of determining movements, strain, vibrations, shape or contour of a body.

According to the present invention there is provided a method of measuring displacement of a surface relative to a datum using an interferometer of the type in which a beam of co-herent light is directed at the surface and first and second speckle interference patterns are formed and superimposed on one another, the method comprising the steps of observing a single speckle of the superimposed patterns, monitoring the cyclic variation in intensity of the observed speckle caused by a relative phase change between the first and second patterns due to displacement of the surface relative to the beam, counting the number of cyclic variations in intensity of the observed speckle, and correlating the number counted to the amount of displacement relative to the datum.

In another aspect of the present invention there is provided a method wherein the second pattern is formed by directing a second beam of co-herent light at the same region of the surface at which the first beam is directed.

The invention also provides apparatus for the measurement of displacements of a surface relative to a datum, comprising an interferometer of the type having means for directing a beam of co-herent light at the surface, and means for forming first and second speckle interference patterns and for superimposing one pattern on the other, the apparatus further comprising a monitor means for monitoring the variation in intensity of a single speckle of the superimposed patterns caused by a relative phase change between the first and second patterns due to displacement of the surface relative to the beam, a counter for counting the number of cyclic variations in intensity of the monitored speckle, and correlating means for correlating the number counted to the amount of displacement relative to the datum.

In yet a further aspect the invention provides an apparatus for measuring the relative displacement of one element of a surface with respect to a second element of the surface spaced from the first element comprising an interferometer of the type in which a pair of overlapping unexpanded beams of co-herent light is directed at each element to form a pair of superimposed speckle interference patterns for each element, a monitoring means is provided for monitoring the cyclic variation in intensity of each observed speckle, a counter is provided for counting the number of cyclic variations in intensity of each observed speckle, and a correlating means is provided for correlating the counted numbers of cyclic variations of the observed speckle to the relative displacement between the first and second elements.

The interferometer may be of the type wherein the second pattern is formed by directing a second beam of co-herent light at the same region of the surface at which the first beam is directed.

Alternatively, the interferometer may be of the type wherein the second pattern is formed by directing a second beam of co-herent light at a reference surface.

Alternatively, the interferometer may be of the type wherein a single beam is directed at the surface and the first and second interference patterns are formed and superimposed on one another by shearing an image of the region of the surface at which the beam is directed.

In one embodiment the beam directed at the surface may be modulated and the resulting modulation of the or each observed speckle is detected and compared with the modulation of the beam to derive a signal indicative of the sense of direction of movement of the surface relative to a predetermined direction. This signal may be used to modify the counted member of cyclic variations of the speckle in dependence on the sense of direction of relative movement of the surface. Additionally, this signal may be used to control the modulation of the beam to maintain a predetermined relationship between the phases of the modulated beam and the modulation of the observed speckle.

The area monitored by the monitoring means is restricted to not more than the diameter of the speckle. Preferably, the area monitored is restricted to 0.1 to 0.33 times the diameter of the speckle.

It is to be understood that the term "light" as used herein is intended (where the context permits) to include not only visible light but also other forms of electro-magnetic radiation such as infra-red and ultra-violet and x radiation.

The invention will now be described by way of an example with reference to the accompanying drawings in which:-

Figures 1 and 2 illustrate schematically two different forms of apparatus constructed in accordance with the present invention for measuring in-plane displacements of a surface, and

Figures 3 to 6 illustrate schematically further forms of apparatus constructed in accordance with the present invention, for measuring out-of-plane displacements of a surface.

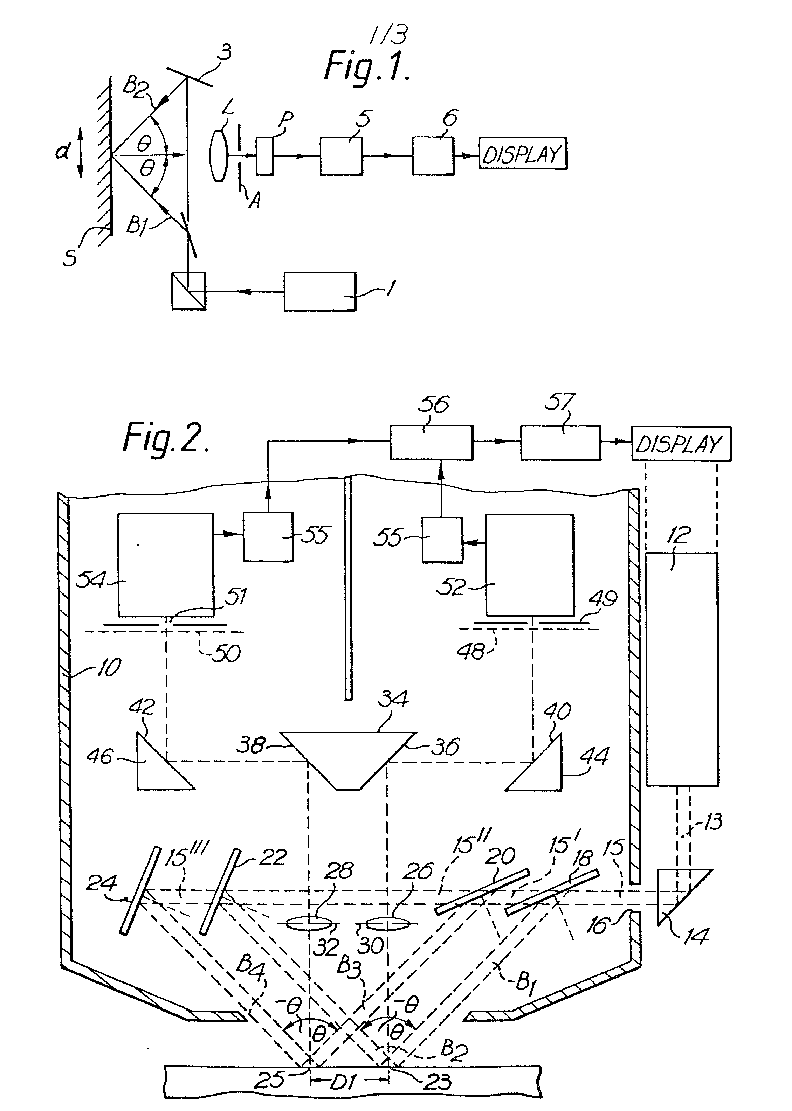

Referring to figure 1 there is shown an interferometer comprising a laser 1 for generating a circular section beam of coherent light. Located in the path of this beam is a semi-reflective mirror 2 and a fully reflective mirror 3 for deriving two overlapping, unexpanded beams of coherent light $B_1 B_2$. The angle of incidence of the beams $B_1 B_2$ are $+ \theta$ and $- \theta$ respectively to the normal to the surface S, to be examined, The surface S is assumed to lie in the x - y plane so that the normals to that surface lie in the direction of the z axis.

The beams $B_1 - B_2$ are of at least substantially the same width, the beam width being such that the surface element illuminated by the beams $B_1 B_2$ in the regions of overlapping, are some 2 - 3 mm in extent measured in the direction of the x-axis which, as shown in Figure 1, is arranged to coincide with the direction in which the in-plane deformation of the surface is to take place.

The beams $B_1 B_2$ each produce an interference pattern due to light scattered from the surface interfering with each beam. The two interference patterns are superimposed on one another and a magnified image of the illuminated surface is formed in an image plane at A by a lens means L (the lens means being represented in Figure 1 as single lenses). Preferably the lens means L is of short focal length (for example, in the range 25 mm - 10 mm) placed close to the surface S, and is of small aperture (in the range of $f_{/25}$ - $f_{/50}$) so that the speckles in the superimposed speckle pattern produced in the image plane are relatively large (for example, of the order of 1 mm diameter).

The image formed in the image plane is observed preferably through a small aperture arranged in the image plane and of the order of 0.33 to 0.1 the diameter of the image plane speckles, by a photo-sensitive transducer P. In this way the cyclic variations in intensity of the observed speckle derived from the surface, due to a relative phase change between the interference patterns produced by in-plane deformation of the surface S in the direction of the x-axis, are monitored.

The output signal of the transducer P is fed to the input of a counting circuit 5 which counts the number of cyclic variations in intensity of the observed speckle. The output signal of the counter is fed to a correlating circuit 6 which correlates the number of cyclic variations to the amount of displacement of the surface relative to the beams $B_1$ $B_2$.

If the frequency of cyclic variation in intensity of the observed speckle is N, and displacements in the x direction at the surface is d, then for a laser light wavelength of $\lambda$

$$N = \frac{2 \sin \theta}{\lambda} . d \qquad (4)$$

The transducer P is conveniently provided by a photo-multiplier tube and the outputs are readily processed electronically to provide for an automatic and continuous display of the corresponding displacement without the need for the making of an initial recording as in the prior art systems hereinbefore referred to. Furthermore, the use of unexpanded laser beams, instead of the collimated beams used in said prior art systems, considerably improves the light level available for viewing with optical systems employing small apertures and enables good signal to noise ratios to be obtained.

The beams of coherent light are conveniently derived from a Helium/Neon laser, a Cadmium laser, or an Argon ion laser, the comparatively high output of the latter being particularly useful in facilitating the obtaining of good signal to noise ratios in the detector outputs.

It may be noted that, due to the relatively large area of overlap of the two pairs of beams at the surface S, the illustrative method of measuring in-plane displacements is relatively insensitive to displacements of the surface S in the z direction, for example any out-of-plane motion associated with an in-plane strain producing the stress under observation or mechanical movement of the body as a whole due to deformation rig imperfections.

In Figure 2 there is shown, in diagramatic form (not necessarily to scale) a second form of apparatus. The components are housed in a suitable housing 10 on one side of which a laser 12, providing a source of coherent light, may be mounted in any suitable manner. The laser 12 is arranged to emit an unexpanded beam 13 (circular in cross section) of coherent light of selected wavelength, which beam is deflected through $90^{\circ}$, by internal reflection in a right-angled prism 14 mounted on the exterior of the housing 10, and enters the housing through an aperture 16 as what may, for convenience, be referred to as a first beam 15.

Arranged in the path of the first beam 15 is means for deriving therefrom first and second pairs of similar unexpanded secondary beams (also circular in cross section) of coherent light, the first pair of secondary beams being identified, in Figure 2, by the references $B_1$, $B_2$ and the second pair of secondary beams being identified by the reference $B_3$, $B_4$. The means for deriving the secondary beam $B_1$ - $B_4$ comprises semi-reflecting mirrors 18, 20 and 22, and a mirror 24. These are arranged, as shown in Figure 2, to direct the first pair of secondary beams $B_1$, $B_2$ on to a first surface element 23 of a planar surface S of a body under observation, and to direct the second pair of secondary beams $B_3$, $B_4$ on to a second surface element 25 of that surface. The mirror arrangement is such that each pair of beams impinge upon the respective surface element in overlapping relationship and inclined to the normal at that surface element at angles of $+\theta$ and $-\theta$. The value of $\theta$ conveniently lies in the range of $30^\circ$ - $60^\circ$ and, in Figure 2 is shown as being $45^\circ$. The angles at which the beams impinge on the surface S should be equal within a tolerance of $\pm 0.2^\circ$ and the mountings (not shown) for the various mirrors are such as to provide any necessary setting up adjustment.

As shown in Figure 2, the semi-reflecting mirror 18 is disposed in the path of the beam 15 with its normal at an angle of $67.5^\circ$ to the beam so that a proportion of the light in beam 15 is reflected to provide the secondary beam $B_1$ which impinges on the surface element 23 at $45^\circ$ to the normal to that surface element. The reflectivity of the mirror 18 is arranged to reflect $\frac{1}{4}$ of the intensity of beam 15 leaving $\frac{3}{4}$ of its intensity to travel on as beam 15' and to impinge upon the second semi-reflecting mirror 20 disposed parallel to the first mirror 18. The reflectivity of mirror 20 is, such as to reflect $\frac{1}{3}$ of the intensity of the beam 15' as the beam $B_3$ which impinges on the second surface element 25 also at $45^\circ$, leaving $\frac{2}{3}$ of the intensity of beam 15' to travel on as beam 15". The latter impinges upon the third semi-reflecting mirror 22 which is disposed with its normal at an angle of $22\frac{1}{2}^{\circ}$ to the beam 15" and its reflectivity is such that $\frac{1}{2}$ the intensity of the beam 15" is reflected as beam $B_2$ to impinge upon the first surface element 23 in overlapping relationship with the beam $B_1$ at an angle of $-45^{\circ}$ to the normal at that surface element, while the remaining part of beam 15" travels on as beam 15"' to impinge upon the mirror 24 which is disposed parallel to the mirror 22 and reflects the beam 15"' as beam $B_4$ which impinges on the second surface element 25 in overlapping relationship with the beam $B_3$ also at an angle of $-45^{\circ}$ to the normal to that surface element. It will be appreciated that the mirror arrangement derives, from the laser beam 15, two pairs of similar secondary beams of at least substantially equal intensity, and that the spacing between the mirrors 18 and 20 and between the mirrors 22 and 24 is equal to the distance $\Delta l$ separating the surface elements 23, 25 illuminated by the pairs of secondary beams, this distance $\Delta l$, being in the direction in which stress in the surface is to be observed. Conveniently $\Delta l$ is of the order of 10mm, and the elliptical regions of overlapping of the beams at the surface elements 23, 25 may conveniently have major diameters of the order of 2 - 3mm.

First and second lens means provided by convex lenses 26, 28 of the same, short, focal length and of the same, small, aperture, are mounted in the housing 10 with the lens axes disposed normally to the first and second surface elements 23,25 respectively. The lenses 26,28 are positioned at equal distances from the surface elements and produce, in image planes 48,50, magnified first and second images of the speckle patterns produced by the first and second surface elements 23, 25 when illuminated by the beams $B_1$, $B_2$ and $B_3$, $B_4$. Conveniently the light passing through the lenses 26, 28 on its way to the image planes may be reflected by pairs of parallel mirror surfaces 36, 40 and 38, 42 respectively, the mirror surfaces being formed on suitable prisms 34, 44 and 46 as shown in Figure 2.

The lenses 26, 28 respectively have stops 30, 32 associated therewith, the stops providing small apertures, conveniently in the range f/25 to f/50, f being the focal length of the lenses 26, 28. Using such an optical arrangement the diameters of the individual speckles formed in the image planes are relatively large (for example of the order of 1mm in dimater). The speckles formed in the image planes 48, 50 are respectively observed, through stops providing small apertures 49, 51 of the order of $1/5$ to $1/10$ the diameter of the individual speckles, by photo-sensitive detectors 52, 54 respectively. The detectors 52, 54 are preferably photo-multiplier tubes and the outputs of these detectors are readily processed by a counting circuit, 55 which counts the number of cyclic variations in the speckle intensities observed by the detectors. The output signal of the counters 55 are fed to a comparitor circuit 56 and a correlating circuit 57 which correlates the numbers counted to displacement of each of the surface elements 1 and 2 in the direction of the x axis and further correlating the counted numbers to the measurement of strain over the length $\Delta$L. (The surface is considered to lie in the x - y plane and the apparatus is so orientated that a line passing through the surface elements 23, 25 lies along the x axis).

The laser 12 preferably comprises an Argon ion laser because of its relatively high output faciliating the obtaining of good signal to noise ratios. Other types of laser which are suitable for use, however, are a Helium/Neon laser or a Cadmium laser. Photo-sensitive detectors other than photo-multiplier tubes may be used, for example, silicon detectors with suitable electronic processing devices.

It is anticipated that the apparatus will be set up and calibrated for a specific application and that no provision for on-site adjustment need be provided. It will be appreciated that the use of the apparatus does not rely on physical contact with the surface under observation and that it may well be used in sitatuions where 'hostile' conditions are experienced e.g. temperature, radiation. If necessary the surface S may be observed through, for example, a quartz window in a wall of an isolation chamber.

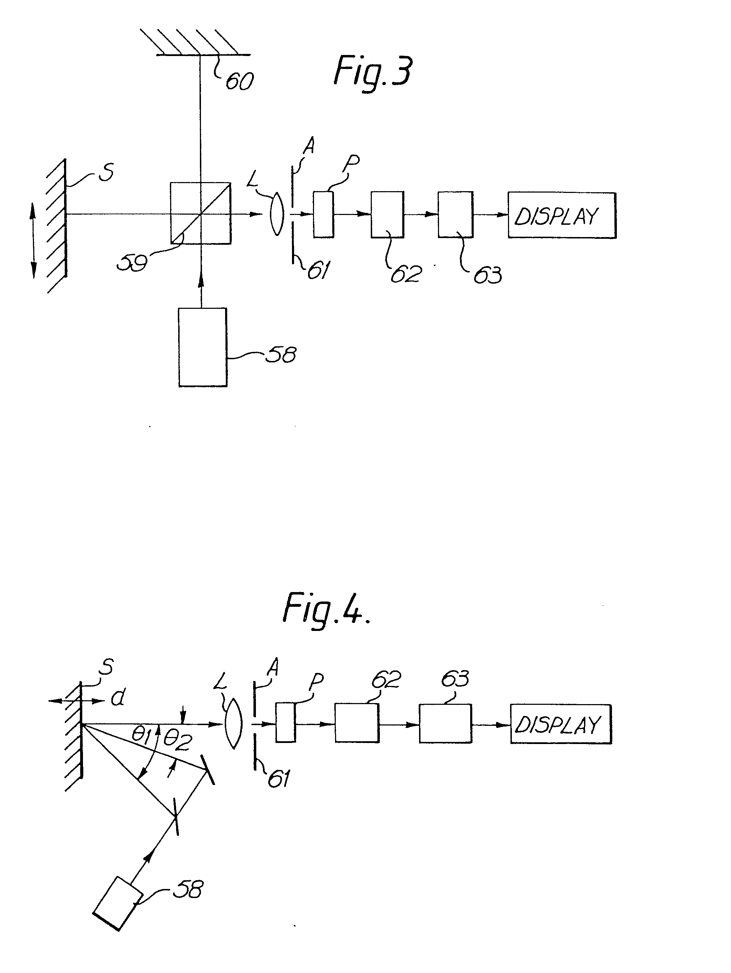

Referring now to figure 3 there is shown an apparatus for measuring out-of-plane displacements of a surface such as vibrations, irregularities, or contour relative to a datum. The apparatus comprises an interferometer of the type comprising a laser 58 for producing a beam of coherent light a beam splitter 59 for splitting the beam into two beams one of which is directed at a surface S to be examined in a direction normal to the surface and the other of which is directed at a reference surface 60 normal to the surface 60. The individual speckled interference patterns are superimposed and a magnified image of the superimposed patterns is formed in an image plane by a lens means L. A stop means 61 is provided to define an aperture equivalent to the diameter of one speckle or less. Preferably the aperture size lies in the range of 0.1 to 0.33 times the diameter of the speckle.

A photo-sensitive transducer P monitors the cyclic variation in intensity of the speckle and the output signal of the transducer is fed to a counting circuit 62 where the number of cyclic variations in intensity is counted and the output of the counting circuit is fed to a correlating device 63 for correlating the number counted.

to the displacement of the surface S in out-of-plane directions. Movement of the surface in the orthogonal planes normal to the out-of-plane movement (represented in fig. 3 by the arrows) does not alter significantly the path length of the beams and hence does not affect the output of the transducer P.

The apparatus of figure 4 functions in a similar way to that of figure 3 and only differs in so far as concerns the design of the interferometer. In the interferometer shown in figure 4 the two beams from the laser are directed at the surface with an angle of incidence of $\theta_1$ and $\theta_2$ respectively. The observation of of the single speckle, the counting of cyclic variations and the correlation of the members counted to actual displacements are performed in the same way as the apparatus of figure 3.

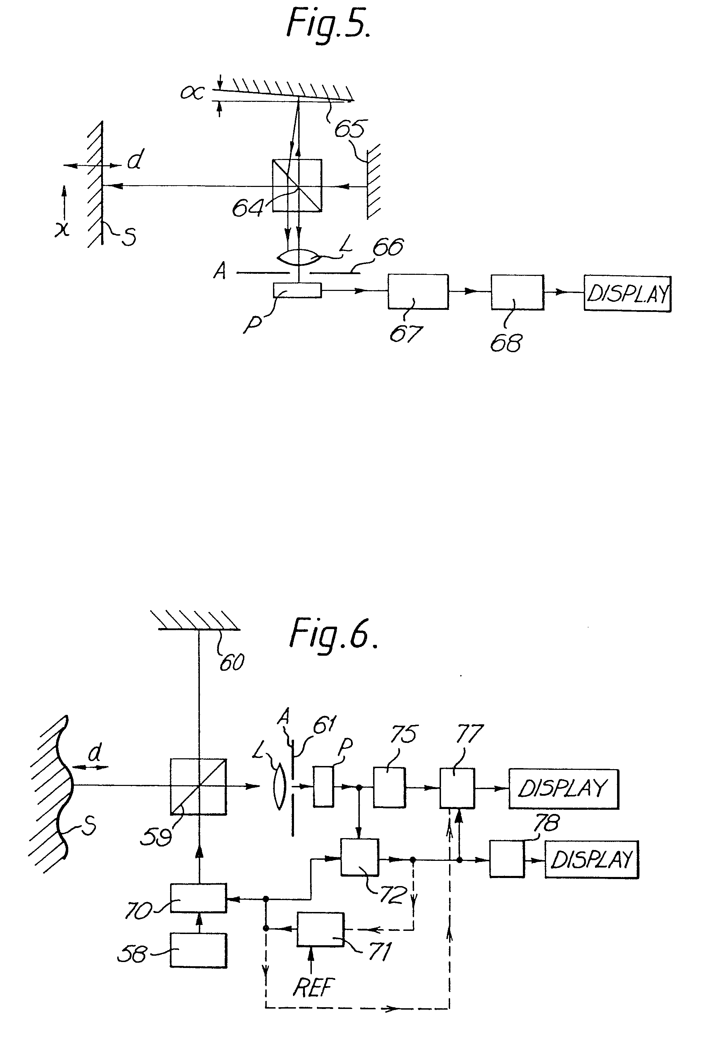

Turning now to figure 5 there is shown a further apparatus for measuring out-of-plane displacements of a surface S. The interferometer of the apparatus of figure 5 is of the type in which a single beam is directed at the surface S to be examined and two speckle interference patterns are formed by shearing the image of the illuminated region of the surface by using a beam splitter 63 and two fully reflective mirrors 64, 65; one of which is in a plane at right angles to a normal to surface S and the other at an angle of $\alpha$ to the normal to surface S. The superimposed interference patterns are observed by a photosensitive transducer P through a lens means L and a restricting aperture 66 similar to those of the apparatus of figures 3 and 4. Here again the output signal of the transducer is fed to a counting circuit 67 and a correlating circuit 68 to correlate the number of cyclic variations of intensity of the observed speckle to displacement of the surface S relative to the beam. A cyclic change of intensity occurs when $\frac{\partial d}{\partial x} = f(\alpha) \cdot \lambda$

where $f(\alpha)$ is a geometrical function of the image shear.

In the apparatus of figure 5, light from a point on the surface S interferes with light from a closely adjacent point of the surface to form two superimposed speckle interference patterns. If one considers a surface S which is not planar, for example of curved shape, the apparatus of figure 5 may be employed to measure the curvature or shape relative to a plane at right angles to a line normal to the surface S. The output of transducer P is responsive to movements normal to the surface. Accordingly if the surface S is moved relative to the beam in directions lying in the plane which is at right angles to the normal to surface S, and the direction of shear of the image is arranged to lie in the same direction, then the output of transducer P will be proportional to the rate of change of displacements normal to the surface with respect to the displacement of the surface S in the direction of movement of the surface in the plane at right angles to the normal to the surface.

With the apparatus of figure 5 the output signal of the transducer P is proportional to $\frac{\delta d}{\delta x}$ , where d is the displacement normal to the surface and x is the direction of displacement of the surface in a plane at right angles to the normal to the surface and is the direction of shear of the image. Such an instrument would be useful in plotting or measuring shapes of objects such as for example the shape of turbine blade aerofoil shapes.

With all the apparatuses of figures 3 to 5 is impossible to resolve the sense of direction of the displacement so these apparatuses would only be useful if one knew that the general shape or displacement would be in a predetermined direction. All the apparatuses of figures 3 to 5 may be modified to enable sense of direction to be determined as shown in figure 6.

Referring to figure 6 there is shown, for example, an apparatus similar to that of figure 3 provided with a modulator for modulating the beam transmitted to the surface and a demodulator and feed back loop which will be described below. The component parts of the apparatus of figure 6 that are the same as those of the apparatus of figure 3 are numbered the same and will not be described here in detail. Referring to figure 6, a modulator 70 is provided for modulating the intensity of the beam transmitted to the surface to be examined the modulator is controlled by a voltage controlled oscillator 71.

The output signal of the transducer P is fed to an input of a phase sensitive detector 72 and the output signal of the oscillator 71 is fed to a second input of the phase sensitive detector 72. The phase sensitive detector 72 is operative to compare the output signal of the oscillator (i.e. the modulation of the beam) with the resulting modulation of the superimposed interference patterns (the observed speckle) to determine the amount of phase difference due to changes in the interferometer and the surface, and to relate this information to the direction of movement and provide a signal at an output 74 of the detector 72 representing the sense of direction.

The output signal of the transducer P is also fed to the input of a demodulator 75 which effectively compares the output signal of the oscillator 71 with the output signal of the transducer P to produce, at its output 76, a signal representative of the demodulated cyclic variation in intensity of the observed speckle. The output signal of the demodulator 75 is fed to a counter 77 to count the number of cyclic changes of intensity of the observed speckle.

The signal at the output 74 of the detector 72 is fed to an input of the counter to modify the count of cyclic variations of intensity to add or subtract the counted numbers depending upon the sense of direction relative to a predetermined datum. The output signal at the output 74 of the detector 72 may also be used to provide an indication of the distance of the surface S from a datum plane by means of a correlating and display device 78. The output signal at the output 74 of the phase detector 72 may also be used to control the oscillator 71 (as indicated in dotted lines) to maintain a predetermined relationship (for example zero phase difference) between the modulated beam and the modulated interference patterns. In this latter case the output signal of the oscillator 71 could be used to modify the output of the counter 77.

It will be seen that the apparatus of figure 6 uses a coarse measurement of the distance of the surface S from a datum plane and combines this measurement with a fine measurement obtained by monitoring the cyclic changes in intensity of the observed speckle due to relative movements or displacements normal to the surface S. Hence the apparatus of figure 6 could be used to plot the shape of an object, for example the curved surface of a turbine blade using the modulation of the beam and also measure variations, for example ripples, in the surface of the blade using the counted numbers of cyclic changes in intensity of the observed speckle. The apparatus of figure 6 can also be used to measure the total distance of each element of the surface S relative to a datum plane at right angles to a line normal to the surface S.

As explained above the apparatus of figure 5 could be modified as shown in figure 6. In this case, since the output of the transducer P is the differential equation $\frac{\delta d}{\delta x}$ the output of the apparatus of figure 5 modified as shown in figure 6 would be a plot of the rate of change of displacements normal to the surface S relative to distances in the x direction (as discussed above) taking into account the direction of the displacements normal to the surface. Hence a surface which is say of sinusoidal shape in the plane of the surface could be measured.

It is understood that the optics can be arranged to produce magnified speckles for observation without the use of a lens to produce magnified images. For example the apparatus of Figure 3 could be modified to produce a tapering beam directed at the surface S and an angled half silvered mirror placed in the path of the beam so that the speckles produced at the surface appear magnified; the magnification being a function of the area of illumination and the focal length from the surface to the half silvered mirror.

With the apparatus of Figure 3 cyclic variations of intensity of the observed speckle occur for displacements of normal to the surface. With the apparatus of Figure 4 a cyclic variation of intensity occurs when the displacement $d = $ $(Sin \ 0, - Sin \ 0_2)$ and $Sin \ 0, - Sin \ 0_2$ can be made small.

CLAIMS

1. A method of measuring displacement of a surface relative to a datum using an interferometer of the type in which a beam of co-herent light is directed at the surface and first and second speckle interference patterns are formed and superimposed on one another, the method comprising the steps of observing a single speckle of the superimposed patterns, monitoring the cyclic variation in intensity of the observed speckle caused by a relative phase change between the first and second patterns due to displacement of the surface relative to the beam, counting the number of cyclic variations in intensity of the observed speckle, and correlating the number counted to the amount of displacement relative to the datum.

2. A method according to Claim 1 wherein the second pattern is formed by directing a second beam of co-herent light at the same region of the surface at which the first beam is directed.

3. A method according to Claim 1 wherein the second pattern is formed by directing a second beam of co-herent light at a reference surface.

4. A method according to Claim 1 wherein a single beam is directed at the surface and the first and second interference patterns are formed and superimposed on one another by shearing an image of the region of the surface at which the beam is directed.

5.    A method of measuring the relatiye displacement of
one element of a surface with respect to a second element
of the surface spaced from the first element using an
interferometer of the type in which a pair of overlapping
unexpanded beams of co-herent light is directed at each
element to form a pair of superimposed speckle interference patterns for each element, observing a speckle of
each superimposed pattern, monitoring the cyclic
variation in intensity of each observed speckle caused
by a relative phase change between the interference
patterns constituting the superimposed patterns due to
displacement of the respective elements relative to
the respective beams directed at the element, counting
the number of cyclic variations in intensity of the
observed speckles, and correlating the counted numbers
to the relative displacement between the first and
second elements.

6.    A method according to Claim 2 for the measurement
of displacements of the surface in a direction at right
angles to a normal to the surface wherein the angle of
incidence of the beams of the, or each, pair of beams
directed at the surface lies respectively at $+\theta$ and $-\theta$
to the normal to the surface.

7.    A method according to Claim 2 for the measurement
of displacements of the surface in a direction normal to
the surface wherein the angle of incidence of the beams
of the or each pair lie at two different acute angles to
the normal to the surface.

8.   A method according to any one of, the preceding claims
wherein the beam directed at the surface is modulated and
the resulting modulation of the or each observed speckle
is detected and compared with the modulation of the beam
to derive a signal indicative of the sense of direction
of movement of the surface relative to a predetermined
direction.

9.   A method according to Claim 8 wherein the signal
indicative of the sense of direction is used to modify
the counted member of cyclic variations of the observed
speckle in dependence on the sense of direction of
relative movement of the surface.

10.   A method according to Claim 8 wherein the signal
indicative of the sense of direction is used to control
the modulation of the beam to maintain a predetermined
relationship between the phases of the modulated beam
and the modulation of the observed speckle, and to
modify the counted number of cyclic variations of the
observed speckle in dependence on the sense of direction
of relative movement of the surface.

11.   A method according to any one of the preceding
claims wherein the field of view of the means monitoring
the intensity of the observed speckle is restricted to
not more than the diameter of the speckle.

12.   A method according to Claim 11 wherein the field
of view of the means monitoring the intensity of the
observed speckle is restricted to 0.1 to 0.33 times the
diameter of the speckle.

13.    Apparatus for the measurement of displacements
of a surface relative to a datum, comprising an interferometer of the type having means for directing a beam
of co-herent light at the surface, and means for forming
first and second speckle interference patterns and for
superimposing one pattern on the other, the apparatus
further comprising a monitor means for monitoring the
variation in intensity of a single speckle of the
superimposed patterns caused by a relative phase change
between the first and second patterns due to displacement
of the surface relative to the beam, a counter for counting
the number of cyclic variations in intensity of the
monitored speckle, and correlating means for correlating
the number counted to the amount of displacement relative
to the datum.

14.    Apparatus according to Claim 13 for measuring the
relative displacement of one element of a surface with
respect to a second element of the surface spaced from
the first element comprising an interferometer of the
type in which a pair of overlapping unexpanded beams of
co-herent light is directed at each element to form a
pair of superimposed speckle interference patterns for
each element, a monitoring means is provided for monitoring
the cyclic variation in intensity of each observed speckle,
a counter is provided for counting the number of cyclic
variations in intensity of each observed speckle, and a
correlating means is provided for correlating the counted
numbers of cyclic variations of the observed speckle
to the relative displacement between the first and second
elements.

15.   Apparatus according to Claim 13 wherein the interferometer is of the type which has means for deriving and directing a second beam of co-herent light at the same region of the surface at which the first beam is directed or at a reference surface to form the second interference pattern.

16.   Apparatus according to Claim 13 wherein the interferometer is of the type in which a single beam of co-herent light is directed at the surface and a shearing means is provided to shear the image of the region of the surface at which the beam is directed to form the first and second interference patterns and to superimpose the first and second patterns.

17.   Apparatus according to Claim 13 wherein the monitoring means comprises a photo-sensitive transducer operable to produce a first signal representative of the intensity of the superimposed patterns and aperture means for restricting the area monitored by the transducer to not more than a single speckle.

18.   Apparatus according to Claim 17 wherein the aperture means restricts the area monitored by the transducer to 0.1 to 0.33 times the diameter of the observed speckle.

19.   Apparatus according to Claim 13 wherein there is provided an imaging means for forming, in an image plane a magnified image of at least one speckle of the superimposed pattern and the monitoring means monitors the magnified image.

20.   Apparatus according to Claim 19 wherein the imaging means comprises a lens the focal length of which is of the order of 25 to 10mm placed close to the illuminated region of the surface.

21.   Apparatus according to Claim 20 wherein the lens has an aperture in the range of f/25 to f/50.

22.   Apparatus according to Claim 17 wherein there is provided a modulator for modulating the intensity of the beam directed at the surface, and a phase sensitive detector operative to receive the first signal and to compare the modulation of the beam to the modulation of the observed speckle to derive therefrom a second signal indicative of the sense of direction of the displacement of the surface relative to a predetermined direction.

23.   Apparatus according to Claim 22 wherein the second signal is fed to the counter to modify the counted number in dependence on the sense of direction of the displacement of the surface relative to the predetermined direction.

24.   Apparatus according to Claim 22 or Claim 23 wherein a control means is provided for controlling the modulator, and the second signal is fed to the control means to control the modulation of the beam to tend to maintain a predetermined relationship between the modulations of the beam and the observed speckle.

25.   Apparatus according to Claim 22 wherein the modulated first signal is fed to the input of a demodulator to produce a demodulated output signal which is fed to an input of the counter.

26. A method of measurement of displacements of a surface substantially as hereindescribed with reference to any one of the accompanying drawings.

27. Apparatus constructed and arranged and adapted to operate substantially as hereindescribed with reference ·to any one of the accompanying drawings.

Fig.1.

Fig.2.

Fig.3

Fig.4.

## Fig.5.

## Fig.6.